# EUROPÄISCHE PATENTANMELDUNG

(11) **EP 2 947 106 A1**
(43) Veröffentlichungstag der Anmeldung: **25.11.2015**
(21) Anmeldenummer: 15164367.3
(22) Anmeldetag: 21.04.2015
(51) Int. Cl.: C08G 18/50, C08G 18/75, C08G 18/79, C08G 18/80, C08G 18/02, C08G 18/08, C08G 18/28, C09D 175/08, C08G 18/32, C08G 18/38

(54) **REAKTIVE ZUSAMMENSETZUNG AUS EINER URETDIONGRUPPEN HALTIGEN DISPERSION UND POLYAMINEN**

(30) Priorität: 15.05.2014 DE 102014209183
(71) Anmelder: Evonik Industries AG, 45128 Essen (DE)
(72) Erfinder: Stache, Wiebke, 45699 Herten (DE); Spyrou, Emmanouil, 46514 Schermbeck (DE); Brückner, Iris, 46284 Dorsten (DE); Büscher, Sven, 48683 Ahaus (DE); Schüller, Jessika, 56767 Gunderath (DE)

(57) **Zusammenfassung**

Die Erfindung betrifft eine reaktive Zusammensetzungen bestehend aus einer wässrigen Uretdiongruppen haltigen Polyurethan-Polyharnstoff-Dispersion mit speziellen internen Emulgatoren und Di- oder Polyaminen und deren Verwendung als Ausgangskomponente bei der Herstellung von Polyurethan-Kunststoffen, insbesondere für wasserlösliche oder wasserdispergierbare Lack-, Klebstoff- oder Dichtstoffbindemittel oder Bindemittelkomponenten.

## Beschreibung

Die Erfindung betrifft eine reaktive Zusammensetzungen bestehend aus einer wässrigen Uretdiongruppen haltigen Polyurethan-Polyharnstoff-Dispersion mit speziellen internen Emulgatoren und Di- oder Polyaminen und deren Verwendung als Ausgangskomponente bei der Herstellung von Polyurethan-Kunststoffen, insbesondere für wasserlösliche oder wasserdispergierbare Lack-, Klebstoff- oder Dichtstoffbindemittel oder Bindemittelkomponenten.

Vor dem Hintergrund einer zunehmend strengeren Umweltgesetzgebung gewannen in den letzten Jahren wasserdispergierbare Polyisocyanate für verschiedene Anwendungsgebiete an Bedeutung. Sie finden heute insbesondere als Vernetzerkomponenten für qualitativ hochwertige wasserverdünnbare Zweikomponenten-Polyurethan-Lacke (2K-PUR-Lacke) oder als Zusatzmittel für wässrige Dispersionsklebstoffe Verwendung. Sie dienen zur Vernetzung wässriger Dispersionen in der Textil- bzw. Lederausrüstung oder formaldehydfreier Textildruckfarben und eignen sich darüber hinaus beispielsweise auch als Hilfsmittel zur Nassverfestigung von Papier, wie z. B. in der EP 959 087 offenbart.

Zur Herstellung wasserdispergierbarer hydrophiler Polyisocyanate sind eine Vielzahl unterschiedlicher Verfahren bekannt, unter anderem kommen dabei ionische Modifikationen zum Tragen. Die EP-A 443 138, EP-A 510 438 und EP-A 548 669 beschreiben beispielsweise Polyisocyanatgemische, die chemisch gebundene Carboxylgruppen enthalten. Solche in Wasser dispergierte hydrophiler Polyisocyanate besitzen nur eine geringe Stabilität, weil die freien NCO-Gruppen mit Wasser abreagieren.

Neben hydrophilen Polyisocyanaten mit freien NCO-Gruppen sind auch 1 K-Systeme auf Basis extern blockierter Polyisocyanate bekannt. Der Nachteil dieser dem Stand der Technik entsprechenden 1 K-Systeme auf Basis extern blockierter Polyisocyanate ist, dass beim Härten (Einbrennen) die jeweiligen Blockierungsmittel abgespalten werden.

In PCT/EP2013/067330 werden in Wasser dispergierbare hydrophile Uretdion haltige Polyisocyanate und Polyisocyanatgemische beschrieben und deren Umsetzung mit einen in Wasser löslichen oder emulgierbaren oder dispergierbaren Hydroxylgruppen haltigen Reaktionspartner in Gegenwart von Hilfs- und/oder Zuschlagstoffen und optional einen Katalysator. Bei dieser Zusammensetzung handelt es sich um ein 1 K-System, welches bei erhöhter Temperatur (30 min bei 130°C bzw. 180°C) ausgehärtet werden muss.

In JP2006-321839A wird ein wässriges 1 K-System bestehend aus einem hydrophilen Uretdiongruppen haltigen blockierten Polyisocyanat und einem hydrophilien Polyol beschrieben, welches ebenfalls bei erhöhten Temperaturen (10 min bei 205°C) ausgehärtet werden muss.

In der WO97/18257 werden wässrige Polyurethandispersionen beschrieben, wobei die Polyurethane Uretdiongruppen aufweisen. Durch Reaktion mit geeigneten reaktiven Polyaminverbindungen wie z. B. primären oder sekundären Diaminen, Hydrazinen oder Polyhydraziden kann eine Vernetzungsreaktion erfolgen.

In WO2012130711 wird eine latent reaktive Polyurethandispersion mit aktivierbarer Vernetzung beschrieben, die aus einer Uretdion haltigen Polyurethandispersion und mindestens einem festen Polyamin mit desaktivierter Oberfläche besteht. Die Vernetzung mit dem Polyamin erfolgt dabei erst oberhalb dessen Schmelzpunktes.

Die obengenannten Patentanmeldungen treffen keine Aussage zur Haltbarkeit der Uretdiongruppen haltigen Dispersion. Allgemein herrscht die Erfahrung vor, dass in Wasser eingebrachte Uretdiongruppen aufweisende Substanzen schon nach wenigen Tagen im NCO-Gehalt deutlich abbauen. So führt die einfachste Form der Hydrophilierung, die Anbindung von Polyethergruppen, zu einem Produkt, das in Wasser nicht stabil ist.

Beispielsweise werden in der DE-A 25 38 484 Einkomponenten-Dispersionen beschrieben, bei denen zuerst aus Hydroxylgruppen-funktionellen Polyestern und Polyisocyanaten ein Prepolymer hergestellt wird, das mit 30 - 70 Äquivalent-% Diaminen oder Diolen abreagiert, anschließend hydrophiliert und dann dispergiert wird. Als Polyisocyanat kommt das Uretdion des Isophorondiisocyanats, gegebenenfalls in Gemischen mit Isophorondiisocyanat und dessen Trimere zum Einsatz, wobei in diesem 1 K-System auf beide im Uretdion verkappten Isocyanat-Gruppen je eine Hydroxylgruppe kommt, wobei die Hydroxylgruppen bei der Dispergierung oder danach zugefügt werden. Das hydrophylierte Polyisocyanat zeichnet sich durch eine sehr begrenzte Stabilität in Wasser aus.

In der DE 10 2005 036654 werden Polyurethan-Dispersionen beansprucht, die sowohl Uretdion-Gruppen als auch gegenüber Isocyanatgruppen reaktive Gruppen im selben Molekül aufweist. Dadurch wird neben der Vernetzung zwischen den Polyurethanmolekülen auch eine Vernetzung im Polymeren, die als "intra-penetrating network" bezeichnet wird, möglich. Auch diese abspaltfreien wässrigen Polyurethanhärter sind in Wasser nur sehr begrenzt lagerstabil.

Die Aufgabe der vorliegenden Erfindung war es daher, eine wässrige auf Polyurethan- und/oder Polyharnstoffchemie basierende Zusammensetzung zur Verfügung zu stellen, deren Einzelkomponenten lagerstabil sind und die bei niedrigen Temperaturen unter Vernetzung reagiert, ohne die Nachteile der obengenannten Systeme aufzuweisen. Überraschenderweise wurde gefunden, dass diese Aufgabe durch reaktive Zusammensetzungen bestehend aus einer wässrigen Uretdiongruppen haltigen Polyurethan-Polyharnstoff-Dispersion mit speziellen internen Emulgatoren und Di- oder Polyaminen gelöst werden kann.

Gegenstand der Erfindung ist eine reaktive Zusammensetzung im Wesentlichen enthaltend
A) eine wässrigen Uretdiongruppen haltige Polyurethan-Polyharnstoff-Dispersion mit internen Emulgatoren, wobei der Emulgator wenigstens eine ionogene Gruppe umfasst, die im Falle einer sauren ionogenen Gruppe in Wasser einen pKₐ > 8 bei Raumtemperatur hat oder im Falle einer basischen ionogenen Gruppe einen pK_{b} Wert von > 8 bei Raumtemperatur hat,
B) mindestens ein Diamin und/oder Polyamin,
   wobei das Verhältnis aus latenten NCO Gruppen in der Uretdiongruppen haltigen Polyurethan--Polyharnstoff-Dispersion A) und den Amin-Gruppen in der Komponente B) 4 : 1 bis 1 : 1 beträgt,
C) optional Hilfs- und Zuschlagstoffe und/oder Katalysatoren.

Gegenstand der Erfindung ist auch Herstellung der reaktiven Zusammensetzung und die Verwendung dieser reaktiven Zusammensetzung als Ausgangskomponente bei der Herstellung von Polyurethan-Kunststoffen, insbesondere für wasserlösliche oder wasserdispergierbare Lack-, Klebstoff- oder Dichtstoffbindemittel oder Bindemittelkomponenten.

Das Verfahren zur Herstellung der erfindungsgemäßen reaktiven Zusammensetzungen umfasst die Herstellung einer wässrigen Uretdiongruppen haltigen Polyurethan-Polyharnstoff-Dispersion mit speziellen internen Emulgatoren wie in WO/2014/053269 (PCT/EP2013/067330) beschrieben, welche im Folgenden auch Dispersion A) genannt wird.

Die Herstellung der Dispersion A) umfasst im ersten Schritt die Herstellung des hydrophilen Polyisocyanates P durch Umsetzung eines Uretdiongruppen tragenden Prepolymers I mit wenigstens einem Emulgator II, wobei der Emulgator II wenigstens eine ionogene Gruppe umfasst, die im Falle einer sauren ionogenen Gruppe in Wasser einen pKₐ Wert >8, vorzugsweise >10 und ganz besonders bevorzugt >12 bei Raumtemperatur hat oder im Falle einer basischen ionogenen Gruppe einen pK_{b} Wert von >8, vorzugsweise >10 und ganz besonders bevorzugt >12 bei Raumtemperatur hat.

Für die Herstellung des Uretdiongruppen tragenden Prepolymers I werden Uretdiongruppen enthaltenden Polyisocyanate eingesetzt. Uretdiongruppen enthaltende Polyisocyanate sind wohlbekannt und werden beispielsweise in US 4,476,054, US 4,912,210, US 4,929,724 sowie EP 417 603 beschrieben. Ein umfassender Überblick über industriell relevante Verfahren zur Dimerisierung von Isocyanaten zu Uretdionen liefert das J. Prakt. Chem. 336 (1994) 185 - 200.

Zur Herstellung des Uretdiongruppen tragenden Prepolymers I ist eine breite Palette von Polyisocyanaten geeignet. Geeignete Polyisocyanate sind bevorzugt ausgewählt aus der Gruppe, bestehend aus Isophorondiisocyanat (IPDI), Hexamethylendiisocyanat (HDI), 2,2'-Dicyclohexylmethandiisocyanat (2,2'-H₁₂MDI), 2,4'-Dicyclohexylmethandiisocyanat (2,4'-H₁₂MDI), 4,4'-Dicyclohexylmethandiisocyanat (4,4'-H₁₂MDI) und beliebige Mischungen dieser Isomeren, 2-Methyl-pentan-diisocyanat (MPDI), Mischung aus 2,2,4-Trimethylhexamethylendiisocyanat (2,2,4-TMDI) und 2,4,4-Trimethylhexamethylendiisocyanat (2,4,4-TMDI), Norbornandiisocyanat (NBDI), Methylendiphenyldiisocyanat (MDI), Toluidindiisocyanat (TDI), Tetramethylxylylendiisocyanat (TMXDI), m-Xylylendiisocyanat (XDI), allein oder in Mischungen. In einer bevorzugten Ausführungsform ist das Isocyanat IPDI und/oder 4,4'-H₁₂MDI und/oder HDI.

Die Umsetzung dieser Uretdiongruppen tragenden Polyisocyanate zu Uretdiongruppen aufweisenden Prepolymeren I beinhaltet die Reaktion der freien NCO-Gruppen mit Hydroxylgruppen haltigen monomeren, oligomeren und/oder polymeren Verbindungen. Bevorzugt ist die Hydroxylgruppen haltige Verbindung ausgewählt aus der Gruppe, bestehend aus Polyestern, Polythioethern, Polyethern, Polycaprolactamen, Polyepoxiden, Polyesteramiden, Polyurethanen, niedermolekularen Dialkoholen, niedermolekularen Trialkoholen, niedermolekularen Tetraalkoholen und Monoalkoholen. Niedermolekulare Di-, Tri- und/oder Tetraalkohole sind als Kettenverlängerer geeignet. Als Kettenabbrecher können Monoamine und/oder Monoalkohole verwendet werden, beispielsweise wie in EP 669353, EP 669354, DE 3030572, EP 639598 oder EP 803524 beschrieben.

Bevorzugt werden Polyester mit einer OH-Zahl von 30 bis 1000 mg KOH/g und einem zahlenmittleren Molekulargewicht von 300 bis 6000 g/mol (Mn, ermittelt durch Gel-Permeations-Chromatographie) oder monomere Dialkohole, wie z. B. Ethylenglykol, Propandiol-(1,2) und Propandiol-(1,3), 2,2-Dimethylpropandiol-(1,3), Butandiol-(1,4), Hexandiol-(1,6), 2-Methylpentandiol-1,5, 2,2,4-Trimethylhexandiol-(1,6), 2,4,4-Trimethylhexandiol-(1,6), Heptandiol-(1,7), Dodecandiol-(1,12), Octa-decen-9-diol-(1,12), Thiodiglykol, Octadecandiol-(1,18), 2,4-Di-methyl-2-propylheptandiol-(1,3), Diethylenglykol, Triethylenglykol, Tetraethylenglykol, trans- und cis-1,4-Cyclohexandimethanol, allein oder in Mischungen, eingesetzt. Bevorzugte monomere Dialkohole sind Ethylenglykol, Propandiol-(1,2) und Propandiol-(1,3), 2,2-Dimethylpropandiol-(1,3), Butandiol-(1,4) und/oder Hexandiol-(1,6).

Bevorzugte Uretdiongruppen aufweisende Prepolymere I haben einen freien NCO-Gehalt von mindestens 0,2 aber nicht mehr als 20 Gew.-%, bezogen auf das Gesamtgewicht des Prepolymers, und einen Gehalt an Uretdiongruppen von 0,5 bis 25 Gew.-%, bezogen auf das Gesamtgewicht des Prepolymers, bevorzugt 2 bis 20 Gew.-% (berechnet als C₂N₂O₂, Molekulargewicht 84).

Außer den Uretdiongruppen kann das Prepolymer I auch Isocyanurat-, Biuret-, Allophanat-, Urethan- und/oder Harnstoff-Strukturen aufweisen.

Der Emulgator II umfasst eine oder mehrere ionogene Gruppen, vorzugsweise eine ionogene Gruppe. Bevorzugt ist eine ionogene Gruppe ausgewählt aus der Gruppe, bestehend aus Sulfonaten und Phosphaten.

In einer bevorzugten Ausführungsform ist die ionogene Gruppe des Emulgators II ein in Wasser überwiegend neutral reagierender Rest. Im Falle einer sauren ionogenen Gruppe hat sie in Wasser einen pKₐ-Wert >8 bei Raumtemperatur oder im Falle einer basischen ionogenen Gruppe einen pK_{b}-Wert von >8 bei Raumtemperatur.

Der Emulgator II kann eine oder mehrere OH-, NH- oder NH₂-Gruppen oder sonstige gegenüber Isocyanaten reaktive Gruppen aufweisen. Das zahlenmittlere Molekulargewicht (Mn, ermittelt durch Gel-Permeations-Chromatographie) beträgt bevorzugt <1000 g/mol und ganz besonders bevorzugt <500 g/mol.

Bevorzugt ist der Emulgator II wenigstens eine Sulfonsäure, ausgewählt aus der Gruppe, bestehend aus Hydroxyalkylsulfonsäuren, Hydroxypolyethersulfonsäuren, Aminoalkylsulfonsäuren und Aminopolyethersulfonsäuren. Bevorzugte Hydroxyalkylsulfonsäuren sind 2-Hydroxyethansulfonsäuren und 3-Hydroxypropansulfonsäuren. Bevorzugte Aminoalkylsulfonsäuren sind 2-(Cyclohexylamino)ethansulfonsäure und 3-(Cyclohexylamino)-propansulfonsäure. Besonders bevorzugte Emulgatoren II sind Aminogruppen haltige Sulfonate.

In einer weiteren Ausführungsform ist der Emulgator II wenigstens ein Phosphat.

Die ionogene Gruppe kann durch Neutralisation einer freien Säure, z. B. Sulfonsäure- oder Phosphorsäure-Derivat, generiert werden. Geeignete Neutralisationsmittel für die säuregruppenhaltigen ionogenen Gruppen des Emulgators II sind ausgewählt aus der Gruppe, bestehend aus Alkalihydroxiden und Erdalkalihydroxiden.

Das Uretdion haltige Prepolymer I und der Emulgator II werden mit oder ohne Lösemittel vermischt und dann bei geeigneten Temperaturen zur Reaktion gebracht. Bevorzugt ist das Lösungsmittel ausgewählt aus der Gruppe, bestehend aus Wasser, Aceton, Dimethylformamid, N-Methylpyrrolidon, Ethylacetat, Tetrahydrofuran, Dioxan. Bevorzugt ist das Lösungsmittel Wasser.

Während aminogruppenhaltige Emulgatoren schon bei Raumtemperatur unter Wärmeentwicklung reagieren, empfiehlt es sich bei hydroxygruppenhaltigen Emulgatoren eine Reaktionstemperatur zwischen 40 - 100 °C einzustellen, gegebenenfalls unter Verwendung von literaturbekannten Katalysatoren, wie z. B. Dibutylzinndilaurat (DBTL). Das Molverhältnis aus freien NCO-Gruppen in Prepolymer I und NCO-reaktiven Gruppen in Emulgator II beträgt vor ihrer Umsetzung bevorzugt 2 : 1 bis 1 : 2, besonders bevorzugt 1,1 : 1 bis 1 : 1,1. Nach der Reaktion beträgt der freie NCO-Gehalt des hydrophilen Polyisocyanats P bevorzugt < 2 Gew.%, besonders bevorzugt < 1 Gew.-%.

Das hydrophile Polyisocyanat P kann mit oder ohne Hilfslösemittel nach bekannten Verfahren in Wasser eingebracht werden, um dort die wässrigen Uretdiongruppen haltigen Polyurethan-Polyharnstoff-Dispersion A) zu bilden. Die Dispersion A) ist mindestens 8 Wochen, bevorzugt mindestens 12 Wochen, bei 50 °C stabil, d. h. das hydrophile Polyisocyanat P zeigt auch nach 8 bzw. 12 Wochen bei 50 °C eine vergleichbare Reaktivität zur Ausgangsmischung.

Die wässrige Uretdiongruppen haltige Polyurethan-Polyharnstoff-Dispersion A) weißt Uretdiongruppen auf, die auch als latente NCO-Gruppen bezeichnet werden. Pro Uretdiongruppe werden demnach zwei freie NCO-Gruppen durch Ringöffnung erzeugt.

Die wässrige Uretdiongruppen haltige Polyurethan-Polyharnstoff-Dispersion A) weißt einen Gehalt an Uretdiongruppen von 0,5 bis 25 Gew.-%, bezogen auf das Gesamtgewicht von A), bevorzugt 2 bis 20 Gew.-% (berechnet als C₂N₂O₂, Molekulargewicht 84). Der freie NCO-Gehalt liegt im Bereich von 0,01 bis 1,5 Gew.-%, bevorzugt von 0,05 bis 0,3 Gew.-% bezogen auf das Gesamtgewicht von A).

Di- oder Polyamine B), die wasserlöslich, in Wasser emulgierbar oder in Wasser dispergierbar sind, sind in der Literatur bekannt. Diese können monomere, oligomere und/oder polymere Verbindungen sein. Monomere und oligomere Verbindungen sind bevorzugt ausgewählt aus der Gruppe Diamine, Triamine, Tetramine. Bevorzugt werden für die Komponente B) primäre und/oder sekundäre Di- oder Polyamine eingesetzt, besonders bevorzugt primäre Di- oder Polyamine. Die Amingruppe der Di- oder Polyamine B) kann an einem primären, sekundären oder tertiären Kohlenstoffatom angebunden sein, bevorzugt an einem primären oder sekundären Kohlenstoffatom.

Als Komponente B) können insbesondere die folgenden Amine eingesetzt werden: aliphatische Amine, wie die Polyalkylenpolyamine, Diethylentriamin und Triethylentetramin, Trimethylhexamethylendiamin, 2-Methyl-pentandiamin, Oxyalkylenpolyamine, wie Polyoxypropylendiamin und Polyoxypropylentriamin (z. B., Jeffamine® D-230, Jeffamine® D-400, Jeffamine® T-403, Jeffamine® T-5000), 1,13-Diamino-4,7,10-trioxatridecan, 2,2,4- Trimethylhexamethylendiamin, 2,4,4-Trimethylhexamethylendiamin, cycloaliphatische Amine, wie Isophorondiamin (3,5,5-Trimethyl-3-aminomethyl-cyclohexylamin), 4,4'-Diaminodicyclohexylmethan, 2,4'-Diaminodicyclohexylmethan 2,2'-Diaminodicyclohexylmethan allein oder in Mischungen der Isomeren aus H₁₂MDI, 3,3'-Dimethyl-4,4'-diamino-dicyclohexylmethan, N-Cyclohexyl-1,3-propandiamin, 1,2-Diaminocyclohexan, Piperazin, N-Aminoethylpiperazin, TCD-Diamin(3(4), 8(9)-Bis(aminomethyl)-tricyclo[5.2.1.0^{2,6}]decan), araliphatische Amine, wie Xylylendiamine, aromatische Amine, wie Phenylendiamine und 4,4'-Diaminodiphenylmethan; Addukthärter, welches die Umsetzungsprodukte von Epoxidverbindungen, insbesondere Glycidylether des Bisphenol A und F, mit überschüssigem Amin sind;
Polyamidoaminhärter, die durch Kondensation von Mono- und Polycarbonsäuren mit Polyaminen erhalten werden, insbesondere durch Kondensation von Dimerfettsäuren mit Polyalkylenpolyaminen;
und Mannichbasenhärter, die durch Umsetzung von ein- oder mehrwertigen Phenolen mit Aldehyden, insbesondere Formaldehyd, und Polyaminen erhalten werden.

Auch Mannichbasen z. B. auf Basis von Phenol und/oder Resorcin, Formaldehyd und m-Xylylendiamin sowie N-Aminoethylpiperazin und Abmischungen von N-Aminoethylpiperazin mit Nonylphenol und/oder Benzylalkohol kommen in Frage. Darüber hinaus eignen sich auch Phenalkamine, die häufig in einer Mannichreaktion aus Cardanolen, Aldehyden und Aminen gewonnen werden. Es können auch Mischungen der vorab genannten Aminhärtungsmittel eingesetzt werden.

Bevorzugt werden Isophorondiamin (3,5,5-Trimethyl-3-aminomethyl-cyclohexylamin, IPD), 4,4'-Diaminodicyclohexylmethan, 2,4'-Diaminodicyclohexylmethan 2,2'-Diaminodicyclohexylmethan allein, oder in Mischungen der Isomeren (auch als PACM bezeichnet), und eine Mischung der Isomeren aus 2,2,4-Trimethylhexamethylendiamin und 2,4,4-Trimethylhexamethylendiamin (TMD) eingesetzt. Besonders bevorzugt wird eine Mischung der Isomeren aus 2,2,4-Trimethylhexamethylendiamin und 2,4,4-Trimethylhexamethylendiamin eingesetzt. Ganz besonders bevorzugt wird eine ungefähr 1:1 Mischung der Isomeren aus 2,2,4-Trimethylhexamethylendiamin und 2,4,4-Trimethylhexamethylendiamin eingesetzt.

Besonders bevorzugt werden Di- und Polyamine B) mit einem Oktanol-Wasser-Verteilungskoeffizienten log P von > 0 eingesetzt. Der P-Wert drückt das Verhältnis der Konzentrationen einer Substanz in einem Zweiphasensystem aus 1-Octanol und Wasser aus und wird in der Form des dekadischen Logarithmus als Log P angeben (J. Sangster, Octanol-Water Partition Coefficients: Fundamentals and Physical Chemistry, Vol. 2 of Wiley Series in Solution Chemistry, John Wiley & Sons, Chichester, 1997). Der Oktanol-Wasser-Verteilungskoeffizient steigt mit zunehmender Fettlöslichkeit und sinkender Wasserlöslichkeit. Besonders bevorzugt werden Di- und Polyamine B) mit einem Oktanol-Wasser-Verteilungskoeffizienten log P von > 0 eingesetzt, der nach Eingabe der Strukturformel der jeweiligen Verbindung mit dem Programm Chem Draw Pro 12.0.2.1076, (©1986-2010 CambridgeSoft.) berechnet wurde. Besonders bevorzugt sind Di- und Polyamine B) mit einem Oktanol-Wasser-Verteilungskoeffizienten log P von > 0,5, ganz besonders bevorzugt mit log P von > 1,0. Beispielsweise besitzen die bevorzugten Diamine Isophorondiamin (3,5,5-Trimethyl-3-aminomethyl-cyclohexylamin, IPD), 4,4'-Diaminodicyclohexylmethan, 2,4'-Diaminodicyclohexylmethan 2,2'-Diaminodicyclohexylmethan allein, oder in Mischungen der Isomeren, und eine Mischung der Isomeren aus 2,2,4-Trimethylhexamethylendiamin und 2,4,4-Trimethylhexamethylendiamin (TMD) einen Oktanol-Wasser-Verteilungskoeffizienten log Pvon>1.

Das Verhältnis aus latenten NCO-Gruppen in der Uretdiongruppen haltigen Polyurethan-Polyharnstoff-Dispersion A) und den Amin-Gruppen in der Komponente B) beträgt erfindungsgemäß bevorzugt 4 : 1 bis 1 : 1, besonders bevorzugt 2,2 : 1 bis 2 : 1,2.

Als optionale Komponente C) können die üblichen Zusatzstoffe, wie Verlaufsmittel, z. B. Polysilicone oder Acrylate, Lichtschutzmittel, z. B. sterisch gehinderte Amine, oder andere Hilfsmittel, wie sie z. B. in EP 0 669 353 beschrieben wurden, z. B. Stabilisatoren, Entgasungsmittel, Emulgierhilfsmittel und Dispergieradditive, in einer Gesamtmenge von 0,05 bis 5 Gew.-%, bezogen auf das Gesamtgewicht der Zusammensetzung, zugesetzt werden. Füllstoffe und Pigmente wie z. B. Titandioxid können in einer Menge bis zu 50 Gew.-% der Gesamtzusammensetzung zugesetzt werden. Bevorzugt sind auf dem Lacksektor übliche Hilfs- und Zusatzmittel, wie z. B. Verlaufshilfsmittel, Farbpigmente, Füllstoffe, Mattierungsmittel und externe Emulgatoren.

Organische Lösemittel sind als Hilfsstoff C) geeignet. Flüssige Substanzen, die nicht mit anderen Inhaltsstoffen reagieren, können der erfindungsgemäßen wässrigen Zusammensetzung zugefügt sein, z. B. Ethylacetat, Butylacetat, Ethylenglykolmonomethyletheracetat, Ethylenglykolmonoethyletheracetat, 1-Methoxypropyl-2-acetat, 3-Methoxy-n-butylacetat, Aceton, 2-Butanon, 4-Methyl-2-pentanon, Cyclohexanon, Toluol, Xylol, Chlorbenzol, Testbenzin, höher substituierte Aromaten, wie sie beispielsweise unter den Bezeichnungen Solventnaphtha, Solvesso®, Isopar®, Nappar® (Deutsche EXXON CHEMICAL GmbH) und Shellsol® (Deutsche Shell Chemie GmbH) im Handel sind, Kohlensäureester, wie Dimethylcarbonat, Diethylcarbonat, 1,2-Ethylencarbonat und 1,2-Propylencarbonat, Lactone, wie Propiolacton, Butyrolacton, Caprolacton und Methylcaprolacton, aber auch Lösemittel wie Propylenglykoldiacetat, Diethylenglykoldimethylether, Dipropylenglykoldimethylether, Diethylenglykolethyletheracetat, Diethylenglykolbutyletheracetat, N-Methylpyrrolidon und N-Methylcaprolactam oder beliebige Gemische solcher Lösemittel.

Diese Lösemittel werden bevorzugt lediglich als Hilfslösemittel eingesetzt und machen im Vergleich mit dem Hauptlösemittel Wasser nur geringere Anteile aus. Das Volumenverhältnis von Wasser zu Hilfslösemittel ist bevorzugt größer als 2:1 und liegt bevorzugt im Bereich von 100:1 bis 10:1.

Zur Herstellung der erfindungsgemäßen reaktiven Zusammensetzung werden die Komponenten A) und B) vermischt und gegebenenfalls mit weiteren Hilfs- und Zuschlagkomponenten C) versetzt.

Auch übliche aus der Polyurethanchemie bekannte Katalysatoren können eingesetzt werden, beispielsweise tert. Amine wie Triethylamin, Pyridin, Methylpyridin, Benzyldimethylamin, N,N-Endoethylenpiperazin, N-Methylpiperidin, Pentamethyldiethylentriamin, N,N-Dimethylaminocyclohexan, N,N'-Dimethylpiperazin oder Metallsalze wie Eisen(II)-chlorid, Aluminiumtri-(ethylacetoacetat), Zinkchlorid, Zink(II)-n-octanoat, Zink(II)-2-ethyl-1-hexanoat, Zink(II)-2-ethylcaproat, Zink(II)-stearat, Zink(II)-naphthenat, Zink(II)-acetylacetonat, Zinn(II)-n-octanoat, Zinn(II)-2-ethyl-1-hexanoat, Zinn(II)-ethylcaproat, Zinn(II)-laurat, Zinn(II)-palmitat, Dibutylzinn(IV)-oxid, Dibutylzinn(IV)-dichlorid, Dibutylzinn(IV)-diacetat, Dibutylzinn(IV)-dimaleat, Dibutylzinn(IV)-dilaurat, Dioctylzinn(IV)-diacetat, Molybdänglykolat, oder beliebige Gemische solcher Katalysatoren.

Die Katalysatoren können im erfindungsgemäßen Verfahren mit einer Konzentration im Bereich von 0,001 bis 2 Gew.-%, vorzugsweise im Bereich von 0,005 bis 0,5 Gew.-%, bezogen auf das Gesamtgewicht der Reaktionspartner A) und B), eingesetzt werden.

Ein weiterer Gegenstand der Erfindung ist die Verwendung der erfindungsgemäßen reaktiven Zusammensetzung als Ausgangskomponenten bei der Herstellung von Polyurethan-Kunststoffen, für wasserlösliche oder dispergierbare Lackbindemittel oder Lackbindemittelkomponenten bei der Herstellung von Überzügen unter Verwendung von wässrigen Beschichtungsmitteln auf Basis derartiger Bindemittel oder Bindemittelkomponenten.

Gegenstand der Erfindung sind daher auch Beschichtungen, Verklebungen und Dichtstoffe, hergestellt unter Verwendung der erfindungsgemäßen reaktiven Zusammensetzung, umfassend wenigstens eine wässrige Uretdiongruppen haltigen Polyurethan-Polyharnstoff-Dispersion mit internen Emulgatoren und Di- oder Polyaminen. Bevorzugt sind die erfindungsgemäßen Beschichtungen, Verklebungen und Dichtstoffe unter Verwendung einer erfindungsgemäßen reaktiven Zusammensetzung hergestellt.

Das Verfahren zur Herstellung einer Beschichtung, Verklebung oder eines Dichtstoffs umfasst das Aufbringen der reaktiven Zusammensetzung, umfassend wenigstens eine wässrige Uretdiongruppen haltigen Polyurethan-Polyharnstoff-Dispersion mit speziellen internen Emulgatoren und Di- oder Polyaminen auf ein Substrat. Die aufgebrachte reaktive Zusammensetzung kann weitere Komponenten wie die oben genannten umfassen.

Die Aushärtung und Trocknung der aufgebrachten Zusammensetzung wird bevorzugt bei Temperaturen zwischen 15 °C und 100 °C in einer Zeit zwischen 30 s und einer Woche durchgeführt. Besonders bevorzugt wird die Aushärtung und Trocknung bei 20 - 50 °C in einer Zeit von 5 min bis 24 h durchgeführt. Ganz besonders bevorzugt wird die Aushärtung und Trocknung bei 20 - 30 °C in einer Zeit von 30 min bis 24 h durchgeführt.

Als Substrat, auf das die erfindungsgemäße Zusammensetzung aufgebracht wird, kommen beliebige Substrate in Betracht, wie z. B. Metall, Holz, Glas, Stein, keramische Materialien, Beton, harte und flexible Kunststoffe, Textilien, Leder und Papier, die vor dem Aufbringen gegebenenfalls auch mit üblichen Grundierungen versehen werden können.

Neben der bevorzugten Verwendung als reaktive Zusammensetzung für wässrige 2K-PUR-Lacke eignen sich die erfindungsgemäßen reaktive Zusammensetzungen hervorragend für wässrige Dispersionsklebstoffe, Leder- und Textilbeschichtungen oder Textildruckpasten, als Papierhilfsmittel, die frei von organisch gebundenen Halogenen (AOX-frei) sind, oder auch als Zusatzmittel für mineralische Baustoffe, beispielsweise Beton- oder Mörtelmassen.

Die erfindungsgemäße reaktive Zusammensetzungen und ein Verfahren zu deren Herstellung werden nachfolgend beispielhaft beschrieben, ohne dass die Erfindung auf diese beispielhaften Ausführungsformen beschränkt sein soll.

Sind Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnehmen von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören.

### Beispiele

### Beispiel a

### Herstellung der Uretdiongruppen haltigen Dispersion A

### (nicht erfindungsgemäß)

a1) Herstellung eines Uretdiongruppen haltigen Prepolymers I aus IPDI Uretdion auf Basis von IPDI wurden hergestellt nach der Vorschrift aus DE 10 2005 036654. 10.000 g (45,0 mol) Isophorondiisocyanat (Vestanat® IPDI, Evonik) wurden bei Raumtemperatur unter trockenem Stickstoff und Rühren mit 200 g (2 %) 4-Dimethylaminopyridin (DMAP) als Katalysator versetzt. Nach 24 h wurde die Reaktionsmischung, die einen NCO-Gehalt von 27,2 %, entsprechend einem Oligomerisierungsgrad von 26,5 % aufwies, ohne vorherige Zugabe eines Katalysatorgiftes mit Hilfe eines Dünnschichtverdampfers bei einer Temperatur von 160 °C und einem Druck von 0,3 mbar von flüchtigen Bestandteilen befreit. Man erhielt ein hochviskoses schwach gelb gefärbtes Uretdionpolyisocyanat mit einem Gehalt an freien NCO-Gruppen von 16,8 % und einem Gehalt an monomerem IPDI von 0,3 %. Im ¹³C-NMR-Spektrum wurden keine Isocyanuratstrukturen festgestellt.

a2) Herstellung der Uretdiongruppen haltigen Dispersion A) gemäß WO/2014/053269 1.050,6 g IPDI-Uretdion (aus Herstellvorschrift a1) wurde mit 95,5 g Trimethylolpropan (Aldrich) und 0,23 g DBTL (Dibutylzinndilaurat, Aldrich) in 1,4 I Aceton gelöst. Nach einer Stunde Rühren unter Rückfluss (freier NCO-Gehalt: 3,64 %) wurden 103 g Butanol hinzugegeben und noch weitere 1,5 h unter Rückfluss geheizt, wonach der freie NCO-Gehalt bei 1,49 % lag. Nach dem Abkühlen gab man noch tropfenweise 151 g Vestamin® A95 (Natriumhydroxid neutralisiertes aminhaltiges Alkylsulfonat, 50 % in Wasser, Evonik) als interner Emulgator hinzu. Nach Zugabeende wurde noch einmal für 1,5 h auf Rückfluss erhitzt und das Produkt dann abgekühlt. Der freie NCO-Gehalt betrug 0,1 %, die freie Aminzahl 0,2 %.

650 g dieses Produktes wurden unter starkem Rühren am Dispermaten (3000 U/min) mit 604 g VE-Wasser versetzt. Das Aceton wurde bei 60 °C und 40 mbar am Rotationsverdampfer entfernt und danach das Produkt mit einem 50 µm Filter gefiltert. Der latente NCO-Gehalt betrug 4,5 %, der Festkörper ca. 27 % und die Viskosität 163 mPas.

### Beispiel b

### Zusammensetzung aus Uretdiongruppen haltigen Dispersion A) und Jeffamine® D-400 (erfindungsgemäß)

Bei Raumtemperatur wurden 200 g der **Uretdiongruppen** haltigen Dispersion A) aus Beispiel a) mit der in Tabelle 1 angegebenen Menge Jeffamine® D-400 unter Rühren versetzt. Nach 24 h Rühren bei Raumtemperatur wurde der latente NCO-Gehalt bestimmt und daraus der angegebene Umsatz der Uretdiongruppe in Prozent ermittelt.

### Beispiel c

### Zusammensetzung aus Uretdiongruppen haltigen Dispersion A) und Propylendiamin (erfindungsgemäß)

Bei Raumtemperatur wurden 200 g der Uretdiongruppen haltigen Dispersion A) aus Beispiel a) mit der in Tabelle 1 angegebenen Menge Propylendiamin unter Rühren versetzt. Nach 24 h Rühren bei Raumtemperatur wurde der latente NCO-Gehalt bestimmt und daraus der angegebene Umsatz der Uretdiongruppe in Prozent ermittelt.

### Beispiel d-f

### Zusammensetzung aus Uretdiongruppen haltigen Dispersion A) und Vestamin® - Typen (erfindungsgemäß)

Bei Raumtemperatur wurden 200 g der Uretdiongruppen haltigen Dispersion A) aus Beispiel a) mit der in Tabelle 1 angegebenen Menge der jeweiligen Vestamin® -Type unter Rühren versetzt. Nach 24 h Rühren bei Raumtemperatur wurde der latente NCO-Gehalt bestimmt und daraus der angegebene Umsatz der Uretdiongruppe in Prozent ermittelt.

### Beispiel g

### Lagerung des Uretdiongruppen haltigen Dispersion A) ohne Aminkomponente (Vergleichsbeispiel)

Bei Raumtemperatur wurden 200 g der Uretdiongruppen haltigen Dispersion A) aus Beispiel a) 24 h gerührt und anschließend der latente NCO-Gehalt bestimmt und daraus der angegebene Umsatz der Uretdiongruppe ermittelt.

**Tabelle 1:**

| **Beispiel** | **Einwaage (g)** | **Amin** | **Einwaage (g) Uretdion-Komponente A)** | **Uretdion-Umsatz nach 24h (%)** | **log P (ber)* des Amins** |
|---|---|---|---|---|---|
| b | 23,71 | Jeffamin D400 | 200 | 14 | -0,26 |
| c | 3,80 | Propylendiamin | 200 | 10 | -1,23 |
| d | 8,57 | Vestamin TMD | 200 | 66 | 1,04 |
| e | 9,10 | Vestamin IPD | 200 | 26 | 1,05 |
| f | 11,25 | Vestamin PACM | 200 | 21 | 1,53 |
| g (Vergleich) | 0,00 | Amin | 200 | <1 | |

| | | | | | |
|---|---|---|---|---|---|
| *Berechnung über das Programm ChemDraw Pro 12.0.2.1076 (©1986-2010 CambridgeSoft.)" durch Eingabe der Strukturformel jeder einzelnen Verbindung | | | | | |

Vestamin® TMD: Ungefähre 1:1 Mischung aus 2,2,4-Trimethylhexamethylendiamin und 2,4,4-Trimethylhexamethylendiamin
Vestamin® IPD: Isophorondiamin
Vestamin® PACM: Bis-para-aminocyclohexylmethan (4,4'-Diaminodicyclohexylmethan)Vestamin® von Evonik AG Jeffamine® D-400: Polyoxypropylendiamin mit Molekulargewicht 430 g/mol im Durchschnitt, Huntsman

Aus Tabelle 1 geht hervor, dass die erfindungsgemäßen Zusammensetzungen b-f alle signifikante Uretdion-Umsätze nach 24 h bei Raumtemperatur zeigen. Die erfindungsgemäßen Zusammensetzungen d-f zeigen deutlich höhere Uretdionumsätze als die Beispiele b und c, bei denen Amine mit negativen Verteilungskoeffizienten log P eingesetzt wurden. Der höchste Umsatz wird in Beispiel d mit Vestamin® TMD erreicht. Das Vergleichsbeispiel g zeigt, dass die Uretdiongruppen haltige Komponente aus Beispiel a in Abwesenheit von Aminen stabil ist.

## Patentansprüche

1. Reaktive Zusammensetzung im Wesentlichen enthaltend
A eine wässrige Uretdiongruppen haltige Polyurethan-Polyharnstoff-Dispersion mit internen Emulgatoren, wobei der Emulgator wenigstens eine ionogene Gruppe umfasst, die im Falle einer sauren ionogenen Gruppe in Wasser einen pKₐ > 8 bei Raumtemperatur hat oder im Falle einer basischen ionogenen Gruppe einen pK_{b} Wert von > 8 bei Raumtemperatur hat,
B) mindestens ein Diamin und/oder Polyamin,
wobei das Verhältnis aus latenten NCO-Gruppen in der Uretdiongruppen haltigen Polyurethan--Polyharnstoff-Dispersion A) und den Amin-Gruppen in der Komponente B) 4 : 1 bis 1 : 1 beträgt.
C) optional Hilfs- und Zuschlagstoffe und/oder Katalysatoren.

2. Reaktive Zusammensetzung nach Anspruch 1, wobei A) erhalten wird durch Umsetzung von Uretdiongruppen tragenden Polyisocyanaten zu Uretdiongruppen aufweisenden Prepolymeren I, durch die Reaktion der freien NCO-Gruppen mit Hydroxylgruppen haltigen monomeren, oligomeren und/oder polymeren Verbindungen,
und anschließend Umsetzung des Uretdiongruppen tragenden Prepolymers I mit wenigstens einem Emulgator II zu einem hydrophilen Polyisocyanat P,
und anschließend Dispergieren des hydrophilen Polyisocyanat P in Wasser.

3. Reaktive Zusammensetzung nach mindestens einem der vorherigen Ansprüche, **dadurch gekennzeichnet, dass** Uretdiongruppen tragende Polyisocyanate auf der Basis der Diisocyanate ausgewählt aus Isophorondiisocyanat (IPDI), Hexamethylendiisocyanat (HDI), 2,2'-Dicyclohexylmethandiisocyanat (2,2'-H₁₂MDI), 2,4'-Dicyclohexylmethandiisocyanat (2,4'-H₁₂MDI), 4,4'-Dicyclohexylmethandiisocyanat (4,4'-H₁₂MDI) und beliebige Mischungen dieser Isomeren aus H₁₂MDI, 2-Methyl-pentan-diisocyanat (MPDI), Mischung aus 2,2,4-Trimethylhexamethylendiisocyanat (2,2,4-TMDI) und 2,4,4-Trimethylhexamethylendiisocyanat (2,4,4-TMDI), Norbornandiisocyanat (NBDI), Methylendiphenyldiisocyanat (MDI), Toluidindiisocyanat (TDI), Tetramethylxylylendiisocyanat (TMXDI), m-Xylylendiisocyanat (XDI), allein oder in Mischungen, eingesetzt werden.

4. Reaktive Zusammensetzung nach mindestens einem der vorherigen Ansprüche, **dadurch gekennzeichnet, dass** Hydroxylgruppen haltige Verbindungen ausgewählt aus der Gruppe, aus Polyestern, Polythioethern, Polyethern, Polycaprolactamen, Polyepoxiden, Polyesteramiden, Polyurethanen, niedermolekularen Dialkoholen, niedermolekularen Trialkoholen, niedermolekularen Tetraalkoholen, Monoalkoholen, allein oder in Mischungen, eingesetzt werden.

5. Reaktive Zusammensetzung nach mindestens einem der vorherigen Ansprüche, **dadurch gekennzeichnet, dass** Uretdiongruppen aufweisende Prepolymere I einen freien NCO-Gehalt von mindestens 0,2 bis 20 Gew.-%, bezogen auf das Gesamtgewicht des Prepolymers, und einen Gehalt an Uretdiongruppen von 0,5 bis 25 Gew.-%, bezogen auf das Gesamtgewicht des Prepolymers, aufweisen.

6. Reaktive Zusammensetzung nach mindestens einem der vorherigen Ansprüche, **dadurch gekennzeichnet, dass** der Emulgator II eine oder mehrere OH-, NH-und/oder NH₂-Gruppen aufweist.

7. Reaktive Zusammensetzung nach mindestens einem der vorherigen Ansprüche, **dadurch gekennzeichnet, dass** der Emulgator II eine Sulfonsäure ist.

8. Reaktive Zusammensetzung nach mindestens einem der vorherigen Ansprüche, **dadurch gekennzeichnet, dass** der Emulgator II ausgewählt ist aus der Gruppe, bestehend aus Hydroxyalkylsulfonsäuren, Hydroxypolyethersulfonsäuren, Aminoalkylsulfonsäuren und Aminopolyethersulfonsäuren, allein oder in Mischungen.

9. Reaktive Zusammensetzung nach mindestens einem der vorherigen Ansprüche, **dadurch gekennzeichnet, dass** der Emulgator II ausgewählt ist aus der Gruppe, bestehend aus 2-Hydroxyethansulfonsäuren, 3-Hydroxypropansulfonsäuren 2-(Cyclohexylamino)ethansulfonsäure, 3-(Cyclohexylamino)-propansulfonsäure, allein oder in Mischungen.

10. Reaktive Zusammensetzung nach mindestens einem der vorherigen Ansprüche, **dadurch gekennzeichnet, dass** die wässrige Uretdiongruppen haltige Polyurethan-Polyharnstoff-Dispersion A) einen Gehalt an Uretdiongruppen von 0,5 bis 25 Gew.-%, bezogen auf das Gesamtgewicht von A), berechnet als C₂N₂O₂, Molekulargewicht 84, aufweist, und der freie NCO-Gehalt liegt im Bereich von 0,01 bis 1,5 Gew.-%, bevorzugt von 0,05 bis 0,3 Gew.-%, bezogen auf das Gesamtgewicht von A).

11. Reaktive Zusammensetzung nach mindestens einem der vorherigen Ansprüche, **dadurch gekennzeichnet, dass** als Komponente B) primäre und/oder sekundäre Diamine und/oder Polyamine, besonders bevorzugt primäre Diamine und/oder Polyamine, eingesetzt werden.

12. Reaktive Zusammensetzung nach mindestens einem der vorherigen Ansprüche, **dadurch gekennzeichnet, dass** als Komponente B) Amine ausgewählt aus der Gruppe Polyalkylenpolyamine, Diethylentriamin, Triethylentetramin, Trimethylhexamethylendiamin, 2-Methyl-pentandiamin, Oxyalkylenpolyamine, Polyoxypropylendiamin, Polyoxypropylentriamin, 1,13-Diamino-4,7,10-trioxatridecan, 2,2,4- Trimethylhexamethylendiamin, 2,4,4-Trimethylhexamethylendiamin, cycloaliphatische Amine, Isophorondiamin (3,5,5-Trimethyl-3-aminomethyl-cyclohexylamin), 4,4'-Diaminodicyclohexylmethan, 2,4'-Diaminodicyclohexylmethan 2,2'-Diaminodicyclohexylmethan allein, oder in Mischungen der Isomeren, 3,3'-Dimethyl-4,4'-diamino-dicyclohexylmethan, N-Cyclohexyl-1,3-propandiamin, 1,2-Diaminocyclohexan, Piperazin, N-Aminoethylpiperazin, TCD-Diamin(3(4), 8(9)-Bis(aminomethyl)-tricyclo[5.2.1.0^{2,6}]decan), araliphatische Amine, Xylylendiamine, aromatische Amine, Phenylendiamine, 4,4'-Diaminodiphenylmethan, wobei auch Mischungen der aufgezählten Diamine möglich sind, eingesetzt werden.

13. Reaktive Zusammensetzung nach mindestens einem der vorherigen Ansprüche 1-11, **dadurch gekennzeichnet, dass** als Komponente B) Amine ausgewählt aus der Gruppe der Addukthärter, welches die Umsetzungsprodukte von Epoxidverbindungen, insbesondere Glycidylether des Bisphenol A und F, mit überschüssigem Amin sind;
Polyamidoaminhärter, die durch Kondensation von Mono- und Polycarbonsäuren mit Polyaminen erhalten werden, insbesondere durch Kondensation von Dimerfettsäuren mit Polyalkylenpolyaminen;
und Mannichbasenhärter, die durch Umsetzung von ein- oder mehrwertigen Phenolen mit Aldehyden, insbesondere Formaldehyd, und Polyaminen erhalten werden;
Mannichbasen auf Basis von Phenol und/oder Resorcin, Formaldehyd und m-Xylylendiamin sowie N-Aminoethylpiperazin und Abmischungen von N-Aminoethylpiperazin mit Nonylphenol und/oder Benzylalkohol; Phenalkamine, allein oder in Mischungen, eingesetzt werden.

14. Reaktive Zusammensetzung nach mindestens einem der vorherigen Ansprüche, **dadurch gekennzeichnet, dass** Diamine und/oder Polyamine B) mit einem Oktanol-Wasser-Verteilungskoeffizienten log P von > 0 eingesetzt werden.

15. Reaktive Zusammensetzung nach mindestens einem der vorherigen Ansprüche, **dadurch gekennzeichnet, dass** Polyamine B) mit einem Oktanol-Wasser-Verteilungskoeffizienten mit log P von > 1,0, ausgewählt aus Isophorondiamin (3,5,5-Trimethyl-3-aminomethyl-cyclohexylamin, IPD), 4,4'-Diaminodicyclohexylmethan, 2,4'-Diaminodicyclohexylmethan 2,2'-Diaminodicyclohexylmethan allein oder in Mischungen der Isomeren, Mischung der Isomeren aus 2,2,4-Trimethylhexamethylendiamin und 2,4,4-Trimethylhexamethylendiamin (TMD), allein oder in Mischungen, eingesetzt werden.

16. Reaktive Zusammensetzung nach mindestens einem der vorherigen Ansprüche, **dadurch gekennzeichnet, dass** als Komponente C) Verlaufsmittel, Lichtschutzmittel, Stabilisatoren, Entgasungsmittel, Emulgierhilfsmittel, Dispergieradditive, Füllstoffe und/oder Pigmente, allein oder in Mischungen, eingesetzt werden.

17. Reaktive Zusammensetzung nach mindestens einem der vorherigen Ansprüche, **dadurch gekennzeichnet, dass** als Komponente C) Lösemittel eingesetzt werden.

18. Reaktive Zusammensetzung nach mindestens einem der vorherigen Ansprüche, **dadurch gekennzeichnet, dass** als Komponente C), Katalysatoren ausgewählt aus tert. Aminen, Triethylamin, Pyridin, Methylpyridin, Benzyldimethylamin, N,N-Endoethylenpiperazin, N-Methylpiperidin, Pentamethyldiethylentriamin, N,N-Dimethylaminocyclohexan, N,N'-Dimethylpiperazin, Metallsalzen, Eisen(II)-chlorid, Aluminiumtri-(ethylacetoacetat), Zinkchlorid, Zink(II)-n-octanoat, Zink(II)-2-ethyl-1-hexanoat, Zink(II)-2-ethylcaproat, Zink(II)-stearat, Zink(II)-naphthenat, Zink(II)-acetylacetonat, Zinn(II)-n-octanoat, Zinn(II)-2-ethyl-1-hexanoat, Zinn(II)-ethylcaproat, Zinn(II)-laurat, Zinn(II)-palmitat, Dibutylzinn(IV)-oxid, Dibutylzinn(IV)-dichlorid, Dibutylzinn(IV)-diacetat, Dibutylzinn(IV)-dimaleat, Dibutylzinn(IV)-dilaurat, Dioctylzinn(IV)-diacetat, Molybdänglykolat, oder beliebige Gemische solcher Katalysatoren, eingesetzt werden.

19. Verfahren zur Herstellung der reaktive Zusammensetzung nach Anspruch 1 bis 18, wobei die Komponenten A) und B) vermischt und gegebenenfalls mit weiteren Hilfs- und Zuschlagkomponenten C) versetzt.

20. Verwendung der reaktiven Zusammensetzung nach Anspruch 1 bis 18, zur Herstellung von Polyurethan-Kunststoffen, für wasserlösliche oder wasserdispergierbare Lackbindemittel oder Lackbindemittelkomponenten, und zur Herstellung von Überzügen;
zur Herstellung von Beschichtungen, Verklebungen und Dichtstoffen; für wässrige Dispersionsklebstoffe, Leder- und Textilbeschichtungen, Textildruckpasten, als Papierhilfsmittel, als Zusatzmittel für mineralische Baustoffe.
